# EUROPEAN PATENT SPECIFICATION

(11) **EP 1 501 905 B1**
(45) Date of publication and mention of the grant of the patent: **13.06.2012**
(21) Application number: 03731129.7
(22) Date of filing: 08.05.2003
(51) Int. Cl.: C09D 179/08, C08G 73/10, C08J 3/215

(54) **Process for making polyimide coated particles**
Verfahren zur Herstellung Polyimid-beschichteter Polymerpartikel
Procede de preparation de particules de polymer enrobees de polyimide

(30) Priority: 09.05.2002 US 379311 P
(43) Date of publication of application: 02.02.2005
(73) Proprietor: E.I. DU PONT DE NEMOURS AND COMPANY, Wilmington, DE 19898 (US)
(72) Inventor: KRIZAN, Timothy, D., Wilmington, DE 19810 (US); SCHMECKPEPER, Mark, R., Kennett Square, PA 19348 (US)
(74) Representative: Morf, Jan Stefan
(86) International application number: PCT/US2003/014452
(87) International publication number: WO 2003/095574

(56) References cited:
- EP-A- 0 619 584
- US-A- 4 759 987
- US-A- 6 114 156
- US-B1- 6 328 798
- DATABASE WPI Section Ch, Week 199934 Derwent Publications Ltd., London, GB; Class A82, AN 1999-400247 XP002252092 & JP 11 158275 A (TORAY IND INC), 15 June 1999 (1999-06-15)

## Description

This invention relates to a polymeric particle prepared by forming a polyimide in the presence of a particle of base polymer.

Addition of particles of graphite to a polyimide precursor solution, resulting ultimately in the majority of such graphite particles being encapsulated by the polyimide, has been disclosed. For example, Manwiller (US 4,360,626) discloses the addition of graphite, with preferred average particle size of 5 to 25 microns, to a polyimide precursor solution prior to precipitation. Manwiller does not, however, address the incorporation of materials other than graphite into a polyimide precursor solution.

Mizobe (US 4,759,987) discloses a polyimide powder that can be produced by reacting an acid dianhydride with a diamino compound in an organic solvent to synthesize a polyimide precursor, and adding a particulate filler and/or a fibrous filler uniformly dispersed in an organic solvent to the production system. The particulate filler preferably has a mean particle diameter of not more than 1 micron (10⁻⁶ meter) and a bulk density of not more than 0.15 g/cc.

When a polyimide that incorporates an essentially unreactive particle is molded, it is generally considered that the presence of an unreactive particle of a larger size will serve as a stress riser and impart undesirable properties to an article molded therefrom. It is thus surprising, particularly in view of Mizobe, that we have found it unnecessary to unduly limit the size of an unreactive particle that is incorporated into a polymeric molding material to obtain a balance of desirable properties in a molded article. This is particularly true where the unreactive particle is a synthetic polymer that is capable of serving as a molding material in its own right.

This invention consequently provides a process for preparing polymeric particles, which particle is derived from a base polymer that is relatively large in its mean particle diameter. When an essentially unreactive particle, such as a particle of the base polymer, is to be incorporated into a polymeric molding material, it also advantageous to use a larger size particle because the requirements for handling, milling and screening a larger particle are more easily met for a larger particle than for a smaller particle.

One embodiment of this invention therefore is a process for preparing a polymeric particle by (a) providing a particle of a base polymer that has a mean particle diameter of more than 1 micron, (b) admixing the particle of the base polymer with a polyimide precursor, (c) forming a polyimide from the precursor in the presence of the particle of the base polymer to form a polymeric particle, and(d) recovering the polymeric particle.

It has been found that, when molded, a polymeric particle that has been prepared from a base polymer that has a mean particle diameter of not more than 1 micron is found to have an excellent balance of desirable properties, and in many embodiments has properties that are superior to those of any of the constituent polymers alone.

An article molded or shaped from the polymeric particle of this invention may be used as a gear, bearing, washer, gasket, ring, thrust plug, disc, vane, wear strip, baffle or component in a facility for manufacturing a semiconductor.

This invention relates to a polymeric particle, and objects molded therefrom, wherein the polymeric particle is derived from a particle of a base polymer. The base polymer is preferably an organic polymer, and is more preferably a synthetic polymer that is prepared in a polymerization reaction, and that is capable of serving as a molding material in its own right. Further, the base polymer may be any high temperature polymer, i.e., one showing less than about 5% weight loss after heating for 1 hour at 350°C in air. The base polymer may, for example, be one or more members of the group consisting of polyimide, polybenzoxazole, polybenzimidazole, polyaramide, polyarylene, polyether sulfone, polyarylene sulfide, polyimidothioether, polyoxamide, polyimine, polysulfonamide, polysulfonimide, polyimidine, polypyrazole, polyisoxazole, polythiazole, polybenzothiazole, polyoxadiazole, polytriazole, polytriazoline, polytetrazole, polyquinoline, polyanthrazoline, polypyrazine, polyquinoxaline, polyquinoxalone, polyquinazolone, polytriazine, polytetrazine, polythiazone, polypyrrone, polyphenanthroline, polycarbosilane, polysiloxane, or copolymers or blends thereof. The base polymer is preferably polyimide.

The base polymer may, if desired, be a reclaimed or re-cycled material. Or, it may be a material having performance as to one or more properties, such as elongation, that is somewhat undesirable, and that might indicate that the base polymer would possess a deficiency of some type if it were used as a molding material alone.

The polymeric particle of this invention is prepared by forming a polyimide in the presence of a particle of the base polymer. A particle of the base polymer has a mean particle diameter of more than one micron (10⁻⁶ meter), and, in various embodiments, has a mean particle diameter that is about 2 or more microns, about 5 or more microns, or about 10 or more microns, and yet is about 100 microns or less, about 75 microns or less, or about 50 microns or less. Mean particle diameter may be determined by methods such as in an aqueous slurry using a Coulter Multisizer. In various alternative embodiments, the base polymer may, if desired, also have a bulk density of more than about 0.15 g/cc. Bulk density is the density of the particles whereas density refers to the consolidated part. Density is often larger, sometimes much larger, than the bulk density.

The polymeric particle of this invention is prepared by forming a polyimide or its precursor in the presence of a particle of the base polymer. The particle of the base polymer can be brought together with the polyimide or precursor at any time before the polyimide or precursor precipitates. For this purpose, the base polymer may be added to a reaction vessel in which the polyimide or its precursor is to be prepared. At the time that the base polymer is added to the reaction vessel, there may be present in the reaction vessel either monomers from which a polyimide may be made, or an intermediate product, such as a polyamic acid, from which a polyimide may be made. The base polymer may be added to the reaction vessel as either a dry powder or in the form of a slurry in a solvent.

Alternatively, preparation of the polymeric particle of this invention may occur by means of the addition of a polyimide precursor to a vessel that contains the base polymer slurried in a solvent. The polyimide precursor may be either a mixture of monomers or an intermediate that forms a polyimide, such as a polyamic acid.

In a further alternative, preparation of the polymeric particle of this invention may occur in the reaction vessel in which the base polymer itself has been prepared. In this event, the base polymer is prepared in, but not recovered from, the reaction vessel. If the reaction medium in which the base polymer has been prepared is not incompatible with the formation of a polyimide, a precursor for a polyimide can be added to the reaction mixture. The polyimide precursor may be either a mixture of monomers or an intermediate that forms a polyimide, such as a polyamic acid.

In any of the alternative embodiments described above, upon formation of a polyimide from either monomers or the intermediate, the polyimide and the base polymer are recovered together as a polymeric particle. The polyimide is preferably formed as a coating on the particle of the base polymer, and more preferably encapsulates the particle of the base polymer, to yield the polymeric particle. In various preferred embodiments of the polymeric particle of this invention, it has been found, for example, that the reflectance infrared spectrum of the particle shows that there was no base polymer observable within 0.5 micron of the particle surface. The particle of the base polymer is thus preferably encapsulated with a uniform coating or layer of polyimide having a thickness of at least about 0.5 micron.

In the polymeric particle of this invention, the ratio of the weight of the polyimide coating to the weight of the particle of the base polymer can be in the range from about 20/1 to about 1/20, is preferably in the range of about 10/1 to about 1/10, is more preferably in the range of about 5/1 to about 1/5, and is most preferably in the range of about 3/1 to about 1/3.

In this invention, the polyimide that is formed either in the presence of the base polymer, or as the base polymer itself, contains the characteristic -CO-NR-CO- group as a linear or heterocyclic unit along the main chain of the polymer backbone. The polyimide may be obtained, for example, from the reaction of monomers such as an organic tetracarboxylic acid, or the corresponding anhydride or ester derivative thereof, with an aliphatic or aromatic diamine.

A polyimide precursor as used in the present invention to prepare a polyimide is an organic polymer that becomes the corresponding polyimide when the polyimide precursor is heated or chemically treated. In certain embodiments of the thus-obtained polyimide, 60 to 100 mol%, preferably 70 mol% or more, more preferably 80 mol% or more, of the repeating units of the polymer chain thereof may have a polyimide structure as represented, for example, by the following formula: 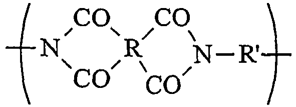 wherein R is a tetravalent aromatic radical having 1 to 5 benzenoid-unsaturated rings of 6 carbon atoms, the four carbonyl groups being directly bonded to different carbon atoms in a benzene ring of the R radical and each pair of carbonyl groups being bonded to adjacent carbon atoms in the benzene ring of the R radical; and R' is a divalent aromatic radical having 1 to 5 benzenoid-unsaturated rings of carbon atoms, the two amino groups being directly bonded to different carbon atoms in the benzene ring of the R' radical.

Examples of certain preferred polyimide precursors are aromatic, and provide, when imidized, polyimides in which a benzene ring of an aromatic compound is directly bonded to the imide group. An especially preferred example of such a polyimide precursor includes a polyamic acid having a repeating unit represented, for example, by the following general formula, wherein the polyamic acid may be either a homopolymer or copolymer of two or more of the repeating units: 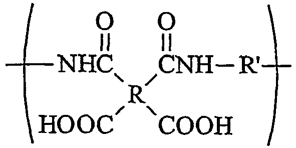 wherein R and R' are as set forth above.

Typical examples of a polyamic acid having a repeating unit represented by the general formula above are those obtained from pyromellitic dianhydride (PMDA) and diaminodiphenyl ether (ODA) and 3,3'-4,4'-biphenyltetracarboxylic dianhydride (BPDA) and ODA. When subjected to ring closure, the former becomes poly(4,4'-oxydiphenylenepyromellitimide) and the latter becomes poly(4,4'-oxydiphenylene-3,3'-4,4'-biphenyltetracarboxy imide). Most preferred is a polyamic acid obtained from PMDA and ODA.

A typical example of a polyimide prepared by a solution imidization process is a rigid, aromatic polyimide composition having the recurring unit 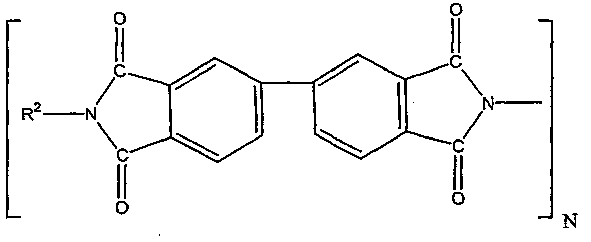 where R² is greater than 60 to about 85 mole percent paraphenylene diamine ("PPD") units and 15 to less than 40 mole % metaphenylene diamine ("MPD") units. Polyimide compositions having 70% PPD and 30% MPD are often preferred.

The tetracarboxylic acids preferably employed in the practice of the invention, or those from which derivatives useful in the practice of this invention may be prepared, are those having the general formula: 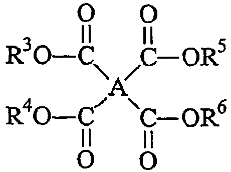 wherein A is a tetravalent organic group and R³ to R⁶, inclusive, are each selected from the group consisting of hydrogen and lower alkyl, and preferably methyl, ethyl or propyl. The tetravalent organic group A preferably has one of the following structures: 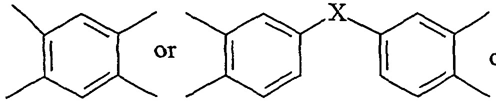 or 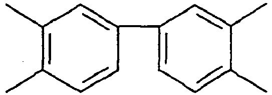 wherein X is one or more of the following: 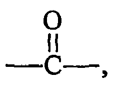 -O-, -S-, -SO₂-, -CH₂-, -CH₂CH₂-, or

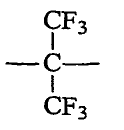

As the aromatic tetracarboxylic acid component, there can be mentioned aromatic tetracarboxylic acids, acid anhydrides thereof, salts thereof and esters thereof. Examples of the aromatic tetracarboxylic acids include 3,3',4,4'-biphenyltetracarboxylic acid, 2,3',3,4'-biphenyltetracarboxylic acid, pyromellitic acid, 3,3',4,4'-benzophenonetetracarboxylic acid, 2,2-bis(3,4-dicarboxyphenyl)propane, bis(3,4-dicarboxyphenyl) methane, bis(3,4-dicarboxyphenyl)ether, bis(3,4-dicarboxyphenyl)thioether, bis(3,4-dicarboxyphenyl)phosphine, 2,2-bis(3',4'-dicarboxyphenyl)hexafluoropropane, and bis(3,4-dicarboxyphenyl)sulfone.

These aromatic tetracarboxylic acids can be employed singly or in combination. Preferred is an aromatic tetracarboxylic dianhydride, and particularly preferred are 3,3',4,4'-biphenyltetracarboxylic dianhydride, pyromellitic dianhydride and a mixture thereof.

As an organic aromatic diamine, use is preferably made of one or more aromatic and/or heterocyclic diamines which are themselves known to the art. Such aromatic diamines can be represented by the structure: H₂N-R⁷-NH₂, wherein R⁷ is an aromatic group containing up to 16 carbon atoms and, optionally, containing up to one hetero atom in the ring, the hetero atom being selected from the group consisting of -N-, -O- and -S-. Also included herein are those R⁷ groups wherein R⁷ is a diphenylene group or a diphenylmethane group. Representative of such diamines are:
2,6-diaminopyridine
3,5-diaminopyridine
meta-phenylene diamine
para-phenylene diamine
p,p'-methylene dianiline
2,6-diamino toluene
2,4-diamino toluene.

Other examples of the aromatic diamine components, which are merely illustrative, include benzene diamines such as
1,4-diaminobenzene,
1,3-diaminobenzene and
1,2-diaminobenzene,
diphenylether diamines such as
4,4'-diaminodiphenylether,
3,4'-diaminodiphenylether,
3,3'-diaminodiphenylether and
benzophenone diamines such as
3,3'-diaminobenzophenone and
4,4'-diaminobenzophenone,
diphenylphosphine diamines such as
3,3'-diaminodiphenylphosphine and
4,4'-diaminodiphenylphosphine,
diphenylalkylene diamines such as
3,3'-diaminodiphenylmethane,
4,4'-diaminodiphenylmethane,
3,3'-diaminodiphenylpropane and
4,4'-diaminodiphenylpropane,
diphenylsulfide diamines such as
3,3'-diaminodiphenylsulfide and
4,4'-diaminodiphenylsulfide,
diphenylsulfone diamines such as
3,3'-diaminodiphenylsulfone and
4,4'-diaminodiphenylsulfone, and
benzidines such as
benzidine and
3,3'-dimethylbenzidine.
Other useful diamines have one or more non-heteroatom containing aromatic rings, or more than one aromatic ring bridged by a functional group.

These aromatic diamines can be employed singly or in combination. Preferably employed as the aromatic diamine component are 1,4-diaminobenzene, 1,3-diaminobenzene, 4,4'-diaminodiphenylether and a mixture thereof.

A polyamic acid as employed in this invention may be obtained by polymerizing an aromatic diamine component and an aromatic tetracarboxylic acid component preferably in substantially equimolar amounts in an organic polar solvent. The amount of all monomers in the solvent may be in the range of about 5 to 40 wt%, more preferably in the range of about 6 to 35 wt%, most preferably in the range of about 8 to 30 wt%. The temperature for the reaction generally is not higher than about 100°C., preferably in the range of about 10°C to 80°C. The time for the polymerization reaction generally is in the range of about 0.2 to 60 hours.

The process by which a polyimide is prepared may also vary according to the identity of the monomers from which the polymer is made up. For example, when an aliphatic diamine and a tetracarboxylic acid are polymerized, the monomers form a complex salt at ambient temperature. Heating of such a reaction mixture at a moderate temperature of about 100-150°C yields low molecular weight oligomers (e.g. a polyamic acid), and these oligomers may in turn be transformed into higher molecular weight polymer by further heating at an elevated temperature of about 240-350°C. When a dianhydride is used as a monomer instead of a tetracarboxylic acid, a solvent such as dimethylacetamide or N-methylpyrrolidinone is typically added to the system. An aliphatic diamine and dianhydride also form oligomers at ambient temperature, and subsequent heating at about 150-200°C drives off the solvent and yields the corresponding polyimide.

As an alternative to the use of an aliphatic diamine and/or an aliphatic diacid or dianhydride, as described above, an aromatic diamine is typically polymerized with a dianhydride in preference to a tetracarboxylic acid, and in such a reaction a catalyst is frequently used in addition to a solvent. A nitrogen-containing base, phenol or amphoteric materials may be used as such a catalyst. Longer periods of heating may be needed to polymerize an aromatic diamine.

The ring closure may also be effected by conventionally used means such as a heat treatment or a process in which a cyclization agent such as pyridine and acetic anhydride, picoline and acetic anhydride, 2,6-lutidine and acetic anhydride, or the like is used.

In the formation of a polyetherimide from a bisphenol and a dinitrobisimide, the bisphenoxide salt of the bisphenol is first obtained by treatment with caustic soda, followed by an azeotropic distillation to obtain the anhydrous bisphenoxide salt. Heating the bisphenoxide salt and the dinitrobisimide at about 80-130°C in a solvent yields the polyetherimide.

As the organic polar solvent employable in the above-described polymerization reaction, there can be mentioned solvents capable of homogeneously dissolving each monomer of the aromatic diamine component or the aromatic tetracarboxylic acid component, an oligomer produced by the monomers or a low-molecular polyamic acid. Examples of such organic polar solvents include amide solvents such as N,N-dimethylformamide, N,N-dimethylacetamide, N-methyl-2-pyrrolidone, N-methylcaprolactam, pyrrolidone; and dimethylsulfoxide, hexamethylsulfonamide, dimethylsulfone, tetramethylenesulfone, dimethyltetramethylenesulfone, pyridine, tetrahydrofuran; and butyrolactone. These organic polar solvents can be used in combination with other solvents such as benzene, toluene, benzonitrile, xylene, solvent naphtha and dioxane.

In addition to other methods known in the art, a polyimide may also be prepared from the reaction of a polyisocyanate and a dianhydride.

In an alternative embodiment, a particulate filler and/or a fibrous filler uniformly dispersed in an organic solvent can be added to the production system at an appropriate stage from before the time of the synthesis of the polyimide precursor through to the time of the imidization of the polyimide precursor. The organic solvent which can be used for uniformly dispersing a particulate filler and/or a fibrous filler is usually the same as used for the polymerization of the acid dianhydride and the diamino compound. Although the particulate or fibrous filler may be added as such, it is preferred that the filler is sufficiently dispersed in a prescribed amount of such organic solvent. Addition of the filler in a dispersed state in an organic solvent may be preferred because the filler previously wetted with the organic solvent can be uniformly dispersed in the reaction system and be more easily incorporated into either the particle of the base polymer or the polyimide the encapsulates the particle of base polymer.

The fine filler is typically not added directly to the reaction system but typically is uniformly dispersed in an organic solvent in advance and then added to the system. Thus, the filler can uniformly be dispersed in the reaction system, and, in one embodiment, a polymeric particle is precipitated around the dispersed filler. The addition of the organic solvent having uniformly dispersed therein the fine filler can be effected at any stage before commencement of imidization of the polyimide precursor, i.e., before precipitation of a polymeric particle. For example, the uniform filler dispersion can be added before addition of the acid dianhydride, e.g., aromatic tetracarboxylic acid dianhydride, or the diamino compound, e.g., aromatic diamino compounds, or it may be added to the polyimide precursor solution prior to imidization.

In cases when use of the above-described organic solvent alone is insufficient for wetting the filler, it is preferable that the filler is before-hand wetted with an aliphatic lower alcohol, e.g., methanol, ethanol, propanol, isopropanol, etc., an aliphatic ketone, e.g., acetone, methyl ethyl ketone, methyl isobutyl ketone, etc., or a petroleum naphtha, e.g., benzene, hexane, toluene, xylene, etc. prior to the dispersion in the organic solvent. It is possible to disperse the filler in a mixture of the above-described aliphatic lower alcohol, aliphatic ketone or petroleum naphtha and the aforesaid polymerization solvent. Further, surface active agents and finishing agents, e.g., silane coupling agents, aluminum coupling agents, titanium coupling agents, etc., may also be employed. Uniform dispersion of the filler in the organic solvent can be carried out by using a dispersing device, e.g. a ball mill, a sand mill, attritor, a three-roll mill, a bead mill, a jet mill, a vibration mill, a disper, an impeller mill, a flow jet mixer, a homogenizer, a colloid mill, etc., or a general stirrer, e.g., agitator.

The filler which can be used in the present invention includes various kinds, such as those imparting high strength properties to polyimide molded products, e.g., glass fibers, ceramic fibers, boron fibers, glass beads, whiskers, or diamond powders; those imparting heat dissipation properties to polyimide molded products, e.g., alumina, or silica; those imparting corona resistance, e.g., natural mica, synthetic mica, alumina; those imparting electric conductivity, e.g., carbon black, a silver powder, a copper powder, an aluminum powder, a nickel powder; those imparting heat resistance to polyimide molded products, e.g., aramide fibers, metal fibers, ceramic fibers, whiskers, silicon carbide, silicon oxide, alumina, a magnesium powder, a titanium powder; those imparting low coefficients of thermal expansion, e.g. carbon fibers; and those imparting reduced wear or coefficient of friction, e.g. graphite, fluorine-containing fine powders, and sheet silicates such as kaolinite. These fillers may be used individually or in combination of two or more thereof.

The amount of the filler to be used can appropriately be determined depending on characteristics required for the polyimide molded products, and usually ranges from about 1 to about 50% by weight based on the weight of the polymeric particle.

The advantageous effects of this invention are demonstrated by a series of examples (Examples 1∼7), as described below. The embodiments of the invention on which the examples are based are illustrative only, and do not limit the scope of the invention. The significance of the examples is better understood by comparing these embodiments of the invention with certain controlled formulations (Base Polymers 1∼5), which do not possess the distinguishing features of this invention.

Base Polymers 1-5 were prepared, as described below, and were molded into tensile bars by the method set forth in U.S. 4,360,626. The tensile bars were tested for tensile strength and elongation. From the base polymers, and from different varieties of a polyamic acid, different varieties of a particle of this invention were also prepared (Examples 1∼7). The particles thus prepared were also molded into tensile bars by the same method, and the tensile bars were also tested for tensile strength and elongation.

Base Polymer 1: Particles of a polyimide resin based on pyromellitic dianhydride (PMDA) and 4,4'-oxydianiline (ODA) were prepared according to the method described in U.S. Patent 3,179,614 and were milled to a median particle size of 24 microns. Tensile bars prepared from this resin had a tensile strength of 11.0 kpsi and elongation of 11.9%.

Base Polymer 2: Particles of a polyimide resin based on 3,3',4,4'-biphenyltetracarboxylic dianhydride (BPDA) and p-phenylene diamine (PPD) containing 2.5% graphite as a filler were prepared according to the method described in U.S. Patent 4,755,555. The particles were milled through a 1.18 mm screen. Tensile bars prepared from this resin had a tensile strength of 15.7 kpsi and elongation of 1.8%.

Base Polymer 2a: Particles of a polyimide resin based on 3,3',4,4'-biphenyltetracarboxylic dianhydride (BPDA) and p-phenylene diamine (PPD) containing 2.5% graphite as a filler were prepared according to the method described in U.S. Patent 4,755,555. The particles were milled through a 850 micron screen. Tensile bars prepared from this resin had a tensile strength of 14.9 kpsi and elongation of 1.9%.

Base Polymer 3: Particles of a polyimide resin based on BPDA, PPD, and m-phenylene diamine (MPD) with a 70/30 weight ratio of PPD/MPD were prepared according to the method described in U.S. Patent 5,886,129 and milled to a median particle size of 35 microns. Tensile bars prepared from this resin had a tensile strength of 21.1 kpsi and elongation of 5.3%.

Polyamic Acid 4: A polyamic-acid solution was prepared by reaction of PMDA (165.35 g) and ODA (153.76 g) in pyridine (1920 mL) under nitrogen.

Base Polymer 4: A portion (285 mL) of the solution prepared in Polyamic Acid 4 was added using an addition funnel over 75 minutes to pyridine (513 mL) at 115°C with continuous stirring. During addition, solid polyimide resin particles precipitated from the solution. After 2 additional hours at 115°C, the resulting slurry was filtered, washed with acetone, and dried in a 150°C vacuum oven overnight. The resulting resin was cut using a Wiley mill through a 850 micron screen. Tensile bars prepared from this resin had a tensile strength of 12.0 kpsi and elongation of 6.9%.

Polyamic Acid 5: A polyamic-acid solution with inherent viscosity 0.76 (in pyridine) was prepared by the reaction of BPDA (159.10 g) with PPD (41.04 g) and MPD (17.06 g) in pyridine (2.1 L). After addition, the solution was heated to 70°C for 1 h before cooling to room temperature.

Base Polymer 5: A portion (500 mL) of the solution prepared in Polyamic Acid 5 was added using an addition funnel over 100 minutes to pyridine (900 mL) at 115°C with continuous stirring. During addition, solid polyimide resin particles precipitated from the solution. After 4 additional hours at 115°C, the resulting slurry was filtered, washed with acetone, and dried in a 180°C vacuum oven overnight. The resulting resin was cut using a Wiley mill through a 850 micron screen. Tensile bars prepared from this resin had a tensile strength of 15.5 kpsi and elongation of 2.5%.

Example 1: A polyamic-acid solution was prepared by reaction of PMDA (82.67 g) and ODA (76.88 g) in pyridine (960 mL) in a 3 L round bottom flask under nitrogen. The inherent viscosity was 0.91 (in pyridine). This solution was added using an addition funnel over 75 minutes to a slurry of 72 g of the BPDA-PPD polyimide resin particles described in Base Polymer 2 in 1 L pyridine at 115°C with continuous stirring. After 2 additional hours at 115°C, the slurry was filtered, washed with acetone, and dried in a 150°C vacuum oven overnight. The resulting resin was cut using a Wiley mill through a 850 micron screen. Tensile bars prepared from this resin had a tensile strength of 14.7 kpsi and elongation of 6.4%.

Example 2: A polyamic-acid solution was prepared by reaction of PMDA, (165.35 g) and ODA (153.76 g) in pyridine (1920 mL) in a 3 L round bottom flask under nitrogen. The inherent viscosity was 0.94 (in pyridine). A portion (800 mL) of this solution was added over 60 minutes to a slurry of 247 g of the BPDA-PPD polyimide resin particles described in Base Polymer 2 in 1.5 L pyridine at 115°C with continuous stirring. After 2 additional hours at 115°C, the slurry was filtered, washed with acetone, and dried in a 150°C vacuum oven overnight. The resulting resin was cut using a Wiley mill through a 850 micron screen. Tensile bars prepared from this resin had a tensile strength of 16.0 kpsi and elongation of 3.2%.

Example 3: A portion (500 mL) of the BPDA-PPD/MPD polyamic-acid solution prepared in Polyamic Acid 5 was added using an addition funnel over 100 minutes to a slurry of 82.9 g of the BPDA-PPD polyimide resin particles described in Base Polymer 2a in pyridine (900 mL) at 115°C with continuous stirring. After 4 additional hours at 115°C, the slurry was filtered, washed with acetone, and dried in a 180°C vacuum oven overnight. The resulting resin was cut using a Wiley mill through a 850 micron screen. Tensile bars prepared from this resin had a tensile strength of 17.0 kpsi and elongation of 2.8%.

Example 4: A portion (500 mL) of the PMDA-ODA polyamic-acid solution prepared in Polyamic Acid 4 was added over 75 minutes to a slurry of 120.6 g of the BPDA-PPD/MPD polyimide resin particles described in Base Polymer 3 in 900 mL pyridine at 115°C with continuous stirring. After 2 additional hours at 115°C, the slurry was filtered, washed with acetone, and dried in a 150°C vacuum oven overnight. The resulting resin was cut using a Wiley mill through a 850 micron screen. Tensile bars prepared from this resin had a tensile strength of 10.9 kpsi and elongation of 3.0%.

Example 5: A portion (500 mL) of the PMDA-ODA polyamic-acid solution prepared in Polyamic Acid 4 was added over 75 minutes to a slurry of 35.0 g of the BPDA-PPD/MPD polyimide resin particles described in Base Polymer 3 in 900 mL pyridine at 115°C with continuous stirring. After 2 additional hours at 115°C, the slurry was filtered, washed with acetone, and dried in a 150°C vacuum oven overnight. The resulting resin was cut using a Wiley mill through a 850 micron screen. A reflectance infrared spectrum showed that the observed surface of the particles was PMDA-ODA, with no BPDA-PPD/MPD detected, to a depth of approximately 0.5 micron at 1500 cm⁻¹. Tensile bars prepared from this resin had a tensile strength of 12.0 kpsi and elongation of 4.3%.

Example 6: A portion (500 mL) of the BPDA-PPD/MPD polyamic-acid solution prepared in Polyamic Acid 5 was added using an addition funnel over 100 minutes to a slurry of 82.9 g of the PMDA-ODA polyimide resin particles described in Base Polymer 1 in pyridine (900 mL) at 115°C with continuous stirring. After 4 additional hours at 115°C, the slurry was filtered, washed with acetone, and dried in a 180°C vacuum oven overnight. The resulting resin was cut using a Wiley mill through a 850 micron screen. Tensile bars prepared from this resin had a tensile strength of 15.1 kpsi and elongation of 7.6%.

Example 7: A portion (638 mL) of the PMDA-ODA polyamic-acid solution prepared in Polyamic Acid 4 was added using an addition funnel over 75 minutes to pyridine (345 mL) at 115°C with continuous stirring. During addition, solid polyimide resin particles precipitated from the solution. After 2 additional hours at 115°C, heat was removed and the slurry was allowed to cool to room temperature. After 16 hours, the slurry was reheated to 115°C. A portion (500 mL) of the BPDA-PPD/MPD polyamic-acid solution prepared in Polyamic Acid 5 was added using an addition funnel over 100 minutes to the slurry at 115°C with continuous stirring. After 4 additional hours at 115°C, the slurry was filtered, washed with acetone, and dried in a 180°C vacuum oven overnight. The resulting resin was cut using a Wiley mill through a 850 micron screen. Tensile bars prepared from this resin had a tensile strength of 17.2 kpsi and elongation of 11.1%.

## Claims

1. A process for preparing a polymeric particle, comprising
(a) providing a particle of a base polymer that has a mean particle diameter of more than 1 micron,
(b) admixing the particle of the base polymer with a polyimide precursor,
(c) forming a polyimide from the precursor in the presence of the particle of the base polymer to form a polymeric particle, and
(d) recovering the polymeric particle.

2. A process according to Claim 1 wherein the particle of the base polymer has a bulk density of more than 0.15 g/cc.

3. A process according to Claim 1 wherein the step (a) comprises a step of providing the base polymer dispersed in a liquid.

4. A process according to Claim 3 wherein the liquid is a solvent for a tetracarboxylic acid, or a derivative thereof.

5. A process according to Claim 3 wherein the liquid is a solvent for a diamine.

6. A process according to Claim 1 wherein the step (a) comprises a step of providing the base polymer as a dry powder.

7. A process according to Claim 1 wherein the step (a) comprises a step of preparing a polyimide precursor from monomers, and imidizing the precursor to form a polyimide particle as the particle of the base polymer.

8. A process according to Claim 1 wherein the step (b) comprises a step of adding a polyamic acid to a slurry of a base polymer.

9. A process according to Claim 1 wherein the step (b) comprises a step of admixing the particle of the base polymer with monomers for a polyimide precursor.

10. A process according to Claim 1 wherein the step (c) comprises a step of forming a polyimide from monomers for a polyimide precursor.

11. A process according to Claim 7, 9 or 10 wherein the monomers comprise pyromellitic dianhydride and 4,4'-oxydianiline.

12. A process according to Claim 1 wherein the base polymer is polyimide, polybenzoxazole, polybenzimidazole, or polyaramide.

13. A process according to Claim 1 wherein the base polymer is a polyimide.

14. A process according to Claim 1 wherein the step (c) comprises a step of forming the polyimide as a coating on the particle of the base polymer having a thickness of at least about 0.5 micron.

## Patentansprüche

1. Verfahren zur Herstellung eines polymeren Teilchens, umfassend
(a) das Bereitstellen eines Teilchens eines Basispolymers, das einen mittleren Teilchendurchmesser von mehr als 1 Mikron aufweist,
(b) das Mischen des Teilchens des Basispolymers mit einem Polyimidvorläufer,
(c) das Bilden eines Polyimids aus dem Vorläufer in Gegenwart des Teilchens des Basispolymers unter Bildung eines polymeren Teilchens und
(d) das Gewinnen des polymeren Teilchens.

2. Verfahren nach Anspruch 1, wobei das Teilchen des Basispolymers eine Schüttdichte von mehr als 0,15 g/cm³ aufweist.

3. Verfahren nach Anspruch 1, wobei der Schritt (a) einen Schritt des Bereitstellens des Basispolymers in einer Flüssigkeit dispergiert umfasst.

4. Verfahren nach Anspruch 3, wobei die Flüssigkeit ein Lösungsmittel für eine Tetracarbonsäure oder ein Derivat davon ist.

5. Verfahren nach Anspruch 3, wobei die Flüssigkeit ein Lösungsmittel für ein Diamin ist.

6. Verfahren nach Anspruch 1, wobei der Schritt (a) einen Schritt des Bereitstellens des Basispolymers als Trockenpulver umfasst.

7. Verfahren nach Anspruch 1, wobei der Schritt (a) einen Schritt des Herstellens eines Polyimidvorläufers aus Monomeren und das Imidisieren des Vorläufers unter Bildung eines Polyimidteilchens als Teilchen des Basispolymers umfasst.

8. Verfahren nach Anspruch 1, wobei der Schritt (b) einen Schritt des Hinzusetzens einer polyamischen Säure zu einer Aufschlämmung eines Basispolymers umfasst.

9. Verfahren nach Anspruch 1, wobei der Schritt (b) einen Schritt des Mischens des Teilchens des Basispolymers mit Monomeren für einen Polyimidvorläufer umfasst.

10. Verfahren nach Anspruch 1, wobei der Schritt (c) einen Schritt des Bildens eines Polyimids aus Monomeren für einen Polyimidvorläufer umfasst.

11. Verfahren nach Anspruch 7, 9 oder 10, wobei die Monomere Pyromellithdianhydrid und 4,4'-Oxydianilin umfassen.

12. Verfahren nach Anspruch 1, wobei das Basispolymer Polyimid, Polybenzoxazol, Polybenzimidazol oder Polyaramid ist.

13. Verfahren nach Anspruch 1, wobei das Basispolymer ein Polyimid ist.

14. Verfahren nach Anspruch 1, wobei der Schritt (c) einen Schritt des Bildens des Polyimids als Beschichtung auf dem Teilchen des Basispolymers umfasst, das eine Dicke von mindestens etwa 0,5 Mikron aufweist.

## Revendications

1. Procédé de préparation d'une particule polymère, comprenant
(a) la fourniture d'une particule d'un polymère de base qui a un diamètre moyen de particule supérieur à 1 micron,
(b) le mélange par admixtion de la particule de polymère de base à un précurseur de polyimide,
(c) la mise en forme d'un polyimide à partir du précurseur en la présence de la particule du polymère de base pour former une particule polymère, et
(d) la récupération de la particule polymère,

2. Procédé selon la revendication 1, dans lequel la particule du polymère de base a une densité en vrac supérieure à 0,15 g/cc.

3. Procédé selon la revendication 1, dans lequel l'étape (a) comprend une étape de fourniture du polymère de base dispersé dans un liquide.

4. Procédé selon la revendication 3, dans lequel le liquide est un solvant pour un acide tétracarboxylique, ou son dérivé.

5. Procédé selon la revendication 3, dans lequel le liquide est un solvant pour une diamine.

6. Procédé selon la revendication 1, dans lequel l'étape (a) comprend une étape de fourniture du polymère de base sous la forme d'une poudre sèche.

7. Procédé selon la revendication 1, dans lequel l'étape (a) comprend une étape de préparation d'un précurseur de polyimide à partir de monomères, et l'imidation du précurseur pour former une particule de polyimide comme particule de polymère de base.

8. Procédé selon la revendication 1, dans lequel l'étape (b) comprend une étape d'addition d'un poly(acide amique) à une suspension d'un polymère de base.

9. Procédé selon la revendication 1, dans lequel l'étape (b) comprend une étape de mélange par admixtion de la particule du polymère de base avec des monomères pour un précurseur de polyimide.

10. Procédé selon la revendication 1, dans lequel l'étape (c) comprend une étape de formation d'un polyimide à partir de monomères pour un précurseur de polyimide.

11. Procédé selon la revendication 7, 9 ou 10, dans lequel les monomères comprennent un dianhydride pyromellitique et de la 4,4'-oxydianiline.

12. Procédé selon la revendication 1, dans lequel le polymère de base est le polyimide, le polybenzoxazole, le polybenzimidazole, ou le polyaramide.

13. Procédé selon la revendication 1, dans lequel le polymère de base est un polyimide.

14. Procédé selon la revendication 1, dans lequel l'étape (c) comprend une étape de mise en forme du polyimide comme revêtement sur la particule du polymère de base ayant une épaisseur d'au moins environ 0,5 micron.
